# FASCICULE DE BREVET EUROPEEN

(11) **EP 0 559 580 B1**
(45) Date de publication et mention de la délivrance du brevet: **07.05.1997**
(21) Numéro de dépôt: 93420078.3
(22) Date de dépôt: 19.02.1993
(51) Int. Cl.: H02H 1/00, H02H 7/04, H01H 71/12

(54) **Bloc de connexion d'un relais moyenne tension à des capteurs de courant**
Verbindungsblock für Mittelspannungsrelais mit Stromsensoren
Connecting block for middle voltage relays with current sensors

(30) Priorité: 02.03.1992 FR 9202574
(43) Date de publication de la demande: 08.09.1993
(73) Titulaire: SCHNEIDER ELECTRIC SA, 92100 Boulogne Billancourt (FR)
(72) Inventeur: Petit, Christian, MERLIN GERIN, F-38050 Grenoble Cedex 09 (FR)
(74) Mandataire: Jouvray, Marie-Andrée

(56) Documents cités:
- EP-A- 0 068 934
- DE-B- 1 218 057
- GB-A- 2 091 505
- US-A- 4 037 183
- US-A- 4 152 744

## Description

L'invention concerne un dispositif de connexion d'un relais de protection moyenne tension à des capteurs de courant mesurant le courant dans différentes phases d'un réseau moyenne tension à protéger.

Les relais de protection moyenne tension reçoivent des signaux de mesure de courant de capteurs de courant associés aux différentes phases du réseau moyenne tension à protéger. Les capteurs de courant sont standardisés pour fournir sur leurs enroulements secondaires des courants nominaux de 1A ou de 5A. Le relais comporte généralement des transformateurs de courant destinés à convertir les signaux fournis par les capteurs de courant en signaux de tension de niveau compatible avec le circuit de traitement du relais. Il est connu d'utiliser pour cela des tores comportant un enroulement primaire dont le nombre de tours est adapté en fonction du calibre des capteurs de courant.

Certains relais comportent en entrée des connecteurs spéciaux à contacts court-circuitants pour permettre une déconnexion en charge du relais vis à vis des capteurs de courant. Ces connecteurs sont complexes, encombrants et coûteux.

Le document DE-B-1.218.057 décrit un dispositif de mesure connecté à l'enroulement secondaire d'un capteur de courant par l'intermédiaire d'un transformateur de courant. Une résistance de charge est connectée en permanence en parallèle sur l'enroulement secondaire du transformateur de courant. La déconnexion du dispositif de mesure ne modifie pas de manière significative la charge du transformateur de courant. Un tel dispositif permet de supprimer les connecteurs court-circuitants, mais n'est pas adapté aux relais moyenne tension.

L'invention a pour but de supprimer ces inconvénients.

Selon l'invention, ce but est atteint au moyen d'un dispositif, selon la revendication 1.

Il est ainsi possible de déconnecter le relais en présence de courant moyenne tension, sans ouvrir le circuit secondaire des capteurs de courant moyenne tension et sans utiliser de connecteurs à contacts court-circuitants.

Selon un développement de l'invention, le bloc de connexion comporte des moyens de signalisation d'une connexion du bloc de connexion au relais, constitués par exemple par deux bornes court-circuitées du connecteur.

Les transformateurs de courant toriques et le connecteur sont de préférence montés dans une enveloppe isolante comportant deux coquilles complémentaires, comportant des plots de montage des transformateurs de courant toriques.

Dans un mode de réalisation préférentiel, l'enroulement primaire d'un transformateur torique comporte un insert métallique disposé à l'intérieur d'un plot de montage, deux vis montées de part et d'autre dans l'insert constituant des bornes à vis pour la connexion de l'enroulement primaire du transformateur torique à l'enroulement secondaire du capteur de courant associé.

Deux couvercles, disposés de part et d'autre des coquilles et recouvrant les transformateurs toriques, comportent des passages pour les extrémités des enroulements secondaires des capteurs de courant destinés à être connectés aux enroulements primaires des tores.

D'autres avantages et caractéristiques ressortiront plus clairement de l'exposé qui va suivre d'un mode de réalisation particulier de l'invention, donné à titre d'exemple non limitatif et représenté aux dessins annexés sur lesquels:

La figure 1 représente le schéma électrique d'un bloc de connexion selon l'invention et ses connexions aux capteurs de courant et au relais.

La figure 2 représente, vu en perspective, un mode particulier de réalisation d'un bloc de connexion selon l'invention.

La figure 3 représente une vue de dessus du bloc de connexion selon la figure 2.

Les figures 4 et 5 représentent des coupes respectivement selon A-A et B-B du bloc de connexion selon la figure 3.

Les relais connus comportent généralement des transformateurs destinés à convertir les courants fournis par les capteurs de courant en signaux compatibles avec ceux acceptables par le circuit de traitement électronique du relais. Ces transformateurs sont montés dans le relais lui-même. La déconnexion du relais vis à vis des capteurs de courant est réalisée au niveau des enroulements secondaires des capteurs et ne peut être effectuée en charge sans prendre de mesures complémentaires. En effet, en cas de déconnexion en charge, la tension aux bornes des enroulements secondaires ouverts des capteurs de courant, augmente jusqu'à des valeurs très importantes, de l'ordre du kilovolt, dangereuses pour l'utilisateur qui effectue la déconnexion et pouvant entraîner la destruction des capteurs de courant. Jusqu'ici ce problème a été résolu par l'utilisation, au niveau des connexions entre les capteurs de courant 6 et le relais comportant les transformateurs de courant, de connecteurs spéciaux, coûteux et encombrants, mettant automatiquement en court-circuit l'enroulement secondaire de chacun des capteurs de courant en cas de déconnexion du relais.

Le bloc de connexion selon l'invention permet de résoudre ce problème de façon simple et bon marché.

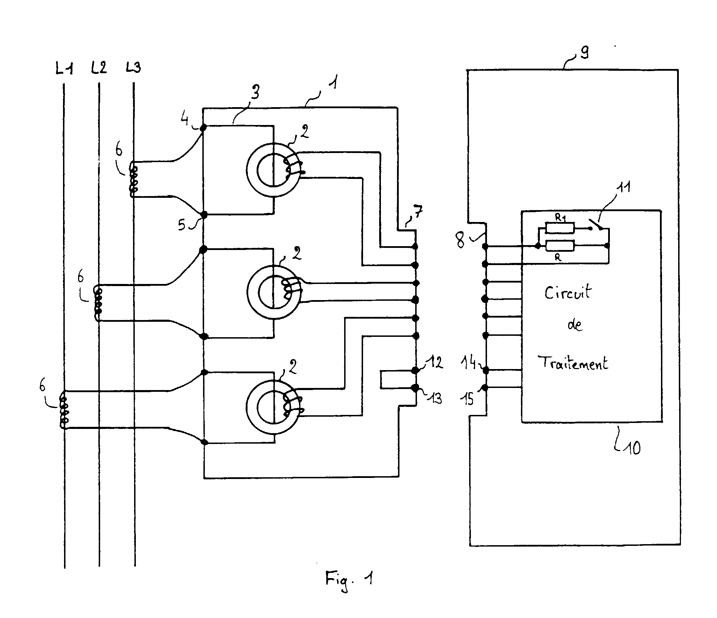

Comme représenté sur la figure 1, le bloc de connexion 1 comporte trois tores 2. Chaque tore 2 est du type à primaire traversant, l'enroulement primaire étant constitué par un conducteur 3 traversant le tore et connecté à deux bornes d'entrée 4 et 5. Les bornes d'entrée 4 et 5 associées à un tore 2 sont respectivement connectées aux sorties d'un capteur de courant 6 associé à une phase L1,L2 ou L3 d'un réseau électrique moyenne tension à protéger.

Les enroulements secondaires des tores 2 sont reliés à un connecteur 7 solidaire du bloc et destiné à coopérer avec un connecteur complémentaire 8 solidaire du relais de protection 9 et connecté au circuit de traitement électronique 10 du relais.

Le raccordement entre les capteurs de courant 6 et le bloc de connexion 1 est réalisé par le tableautier avant la mise en service du relais, le réseau étant hors tension. Les connecteurs 7 et 8 peuvent être des connecteurs standard. La connexion du relais 9 au bloc de connexion 1, par l'intermédiaire des connecteurs 7 et 8, peut être réalisée rapidement, en une seule opération, aussi bien hors tension qu'en charge. En effet, en cas de déconnexion en charge au niveau des connecteurs 7 et 8 la tension au secondaire de chacun des tores 2, bien qu'augmentant, ne peut excéder une tension non dangereuse pour l'utilisateur et ne pouvant entraîner la destruction du tore. Pour améliorer la sécurité, il est préférable que les parties sous tension du connecteur 7 ne soient pas accessibles aux doigts de l'utilisateur, rendant impossible tout contact direct.

Dans un mode de réalisation préférentiel, l'enroulement secondaire de chaque tore 2 est connecté à une résistance de charge R du circuit de traitement, dont une seule est représentée sur la figure. Le circuit de traitement 10 comporte des moyens, par exemple un interrupteur 11, associés aux résistances de charge R pour en modifier la valeur, par exemple en connectant en parallèle une résistance R1, de manière à ce que la résistance de charge puisse prendre deux valeurs distinctes correspondant respectivement aux deux calibres standards (1A et 5A) des capteurs de courant 6. A titre d'exemple non limitatif, les valeurs de la résistance de charge sont telles que la tension nominale aux bornes de la résistance de charge, prise en compte par le circuit de traitement 10, est de 40mV, quelque soit la valeur nominale (1 ou 5A) du courant fourni par les capteurs de courant 6. Le choix d'une tension de bas niveau aux bornes de la résistance de charge, très inférieure aux tensions généralement utilisées, qui sont de l'ordre de 300 à 400mV, permet de réduire le volume des tores. Les tores 2 sont de plus dimensionnés de manière à supporter un courant primaire élevé lorsque leur enroulement secondaire est ouvert. A titre d'exemple, les tores 2 sont conçus pour pouvoir supporter un courant primaire permanent supérieur à 15A, sans que la tension maximale aux bornes de leur secondaire ouvert, liée à la tension de saturation du tore, ne dépasse une tension de l'ordre de 50V, qui ne présente pas de risque. De plus, même si la tension est momentanément plus élevée, par exemple en cas de court-circuit où le courant primaire peut atteindre 80 fois sa valeur nominale, l'utilisation pour le connecteur 7 d'un connecteur femelle dont les contacts ne sont pas directement accessibles à l'utilisateur, permet d'écarter tout risque.

Le connecteur 7 comporte deux bornes additionnelles 12 et 13 qui sont court-circuitées. Ces bornes coopèrent avec deux bornes complémentaires 14 et 15 du connecteur complémentaire 8, elles-mêmes reliées au circuit de traitement 10. Lorsque le bloc de connexion 1 est connecté au relais 9, le circuit de traitement 10 détecte la présence du court-circuit entre ses bornes 14 et 15. Le court-circuit constitue ainsi un moyen simple de signalisation au circuit de traitement de la connexion entre le relais et le bloc de connexion.

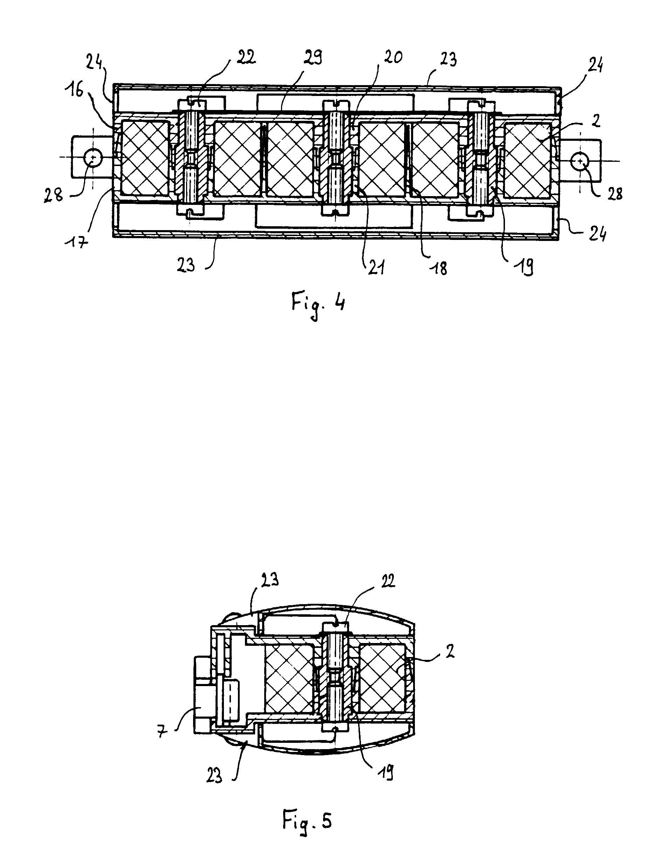

Dans le mode de réalisation préférentiel du bloc de connexion 1 représenté plus en détail sur les figures 1 à 5, le bloc 1 comporte une enveloppe constituée de deux coquilles 16 et 17, en matériau isolant, à l'intérieur desquelles les trois tores 2, sont disposés côte à côte. Des parois isolantes internes 18, solidaires des coquilles, séparent deux tores adjacents.

L'enroulement primaire de chaque tore est constitué par un insert métallique 19 traversant le tore de part en part, et disposé à l'intérieur d'un tube en matière isolante constituant un plot de montage des tores, et destiné à assurer un isolement de l'ordre de 2000V entre le primaire et le secondaire du tore. Sur les figures, le tube est constitué de deux parties tubulaires complémentaires 20 et 21, respectivement solidaires des coquilles 16 et 17, et s'emboîtant l'une dans l'autre.

L'insert 19 est tout d'abord mis en place dans un logement correspondant de la partie tubulaire 20 de la coquille 16 puis maintenu en place par un épaulement de la partie tubulaire 21 de la coquille 17 lorsque les deux coquilles sont fixées l'une à l'autre.

Des vis 22, vissées sur l'insert 19, de part et d'autre du tore, forment les bornes de connexion 4 et 5 pour la connexion du bloc aux enroulements secondaires des capteurs de courant 6.

Deux couvercles 23, ferment les deux faces latérales du bloc de connexion 1, empêchant tout accès direct aux primaires des tores et offrent, en conséquence, une protection supplémentaire de l'utilisateur. Chaque couvercle 23 comporte deux passages latéraux 24 destinés à permettre le passage des fils de sortie des enroulements secondaires des capteurs de courant 6 destinés à être connectés par les vis 22 aux primaires des tores.

Dans le mode de réalisation préférentiel représenté, les couvercles 24 sont montés pivotants, par l'intermédiaire de charnières 25, sur les coquilles 16,17.

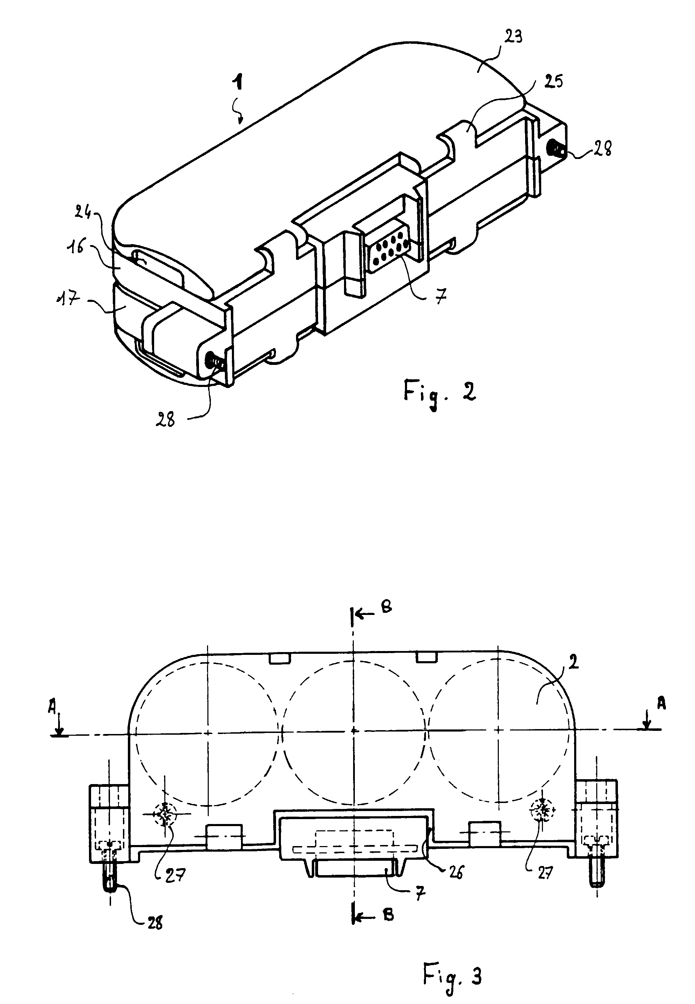

Le connecteur 7 est emboîté dans une niche 26 formée par des évidements complémentaires formés dans la paroi des coquilles. Il est automatiquement maintenu en place lorsque les coquilles sont fixées l'une à l'autre, par exemple par des vis autotaraudeuses 27 (figure 3). Bien entendu d'autres moyens de solidarisation des coquilles, comme le soudage par ultrasons, peuvent être utilisés.

Le bloc de connexion comporte également des moyens permettant de le verrouiller sur le relais après connexion. Sur les figures, ces moyens sont constitués par des vis 28, de préférence imperdables. On peut également prévoir des moyens de plombage de manière à éviter une déconnexion du relais par des personnes non autorisées.

Les coquilles 16 et 17 ne sont pas totalement symétriques, mais comportent des éléments complémentaires 20,21 s'emboîtant les uns dans les autres, notamment au niveau des tubes et des parois 18, de manière à augmenter la résistance de l'ensemble aux contraintes diélectriques. Le relais 9 devant généralement déterminer le déphasage existant entre les courants et la tension du réseau, le bloc de connexion comporte des moyens de repérage des bornes 4 et 5 de manière à éviter une connexion erronée aux primaires des tores.

Une barrette métallique 29 connecte électriquement les vis 22 associées à une même extrémité des trois tores. En effet, dans la plupart des montages, les enroulements secondaires des capteurs sont tous connectés à une de leurs extrémités. Cette barrette peut être enlevée si un montage différent est souhaité.

Dans le bloc de connexion 1, les tores 2 sont disposés à proximité de l'unité de traitement, ce qui est souhaitable étant donné le faible niveau des signaux appliqués au bloc de traitement. Les tores 2 sont néanmoins disposés à l'extérieur du relais 9 et peuvent en être déconnectés sans danger pour l'utilisateur, même lorsque le réseau est sous tension.

## Revendications

1. Dispositif de connexion (1) d' un relais (9) de protection moyenne tension, comportant un circuit de traitement électronique (10), à des enroulements secondaires de capteurs de courant (6) mesurant le courant dans différentes phases (L1,L2,L3) d'un réseau moyenne tension à protéger, dispositif comportant des transformateurs de courant toriques (2) comportant chacun un enroulement secondaire et un enroulement primaire destiné à être relié à l'enroulement secondaire d'un capteur de courant (6) associé, dispositif caractérisé en ce qu'il est constitué par un bloc de connexion indépendant comportant, dans une enveloppe isolante, les transformateurs de courant (2), les enroulements primaires des transformateurs de courant étant connectés à des bornes d'entrée (4, 5) du bloc, destinées à être connectées aux capteurs de courant, et les enroulements secondaires des transformateurs de courant étant connectés à un connecteur (7) fixé à l'enveloppe isolante et destiné à coopérer avec un connecteur complémentaire (8), solidaire du relais de protection (9) et connecté au circuit de traitement électronique (10), de manière à permettre une déconnexion en charge du relais au niveau du connecteur (7) et du connecteur complémentaire (8) provoquant l'ouverture des enroulements secondaires des transformateurs de courant (2).

2. Dispositif de connexion selon la revendication 1, caractérisé en ce qu'il comporte des moyens (12,13) de signalisation d'une connexion du bloc de connexion (1) au relais (9).

3. Dispositif de connexion selon la revendication 2, caractérisé en ce que les moyens de signalisation comportent deux bornes (12,13) court-circuitées du connecteur (7).

4. Dispositif de connexion selon l'une quelconque des revendications 1 à 3, caractérisé en ce que l'enveloppe comporte deux coquilles (16,17) complémentaires, comportant des plots (20,21) de montage des transformateurs de courant toriques (2).

5. Dispositif de connexion selon la revendication 4, caractérisé en ce que l'enroulement primaire d'un transformateur torique (2) comporte un insert métallique (19) disposé à l'intérieur d'un plot de montage (20,21), deux vis (22) montées de part et d'autre dans l'insert (19) constituant des bornes à vis (4,5) pour la connexion de l'enroulement primaire du transformateur torique (2) à l'enroulement secondaire du capteur de courant associé (6).

6. Dispositif de connexion selon l'une des revendications 4 et 5, caractérisé en ce que l'enveloppe comporte deux couvercles (23) disposés de part et d'autre des coquilles (16,17) et recouvrant les transformateurs de courant toriques.

7. Dispositif de connexion selon la revendication 6, caractérisé en ce que les couvercles (23) comportent des passages (24) pour les extrémités des enroulements secondaires des capteurs de courant (6) destinés à être connectés aux enroulements primaires des transformateurs de courant toriques (2).

8. Dispositif de connexion selon l'une quelconque des revendications 1 à 7, caractérisé en ce qu'il comporte des moyens (28) de verrouillage du bloc (1) sur le relais (9).

9. Dispositif de connexion selon l'une quelconque des revendications 1 à 8 caractérisé en ce qu'un bloc de connexion identique peut être utilisé, quel que soit le courant nominal fourni par les capteurs de courant, le circuit de traitement (10) du relais (9) comportant une résistance de charge adaptée audit courant nominal.

## Patentansprüche

1. Einrichtung (1) zum Anschluß eines Mittelspannungs-Schutzrelais (9) mit einer elektronischen Verarbeitungsschaltung (10) an den Strom in verschiedenen Phasen (L1, L2, L3) eines zu schützenden Mittelspannungsnetzes messende Stromwandler (6), wobei die Einrichtung Ringkern-Zwischenwandler (2) mit jeweils einer Sekundärwicklung und einer zum Anschluß an die Sekundärwicklung eines zugeordneten Stromwandlers (6) bestimmten Primärwicklung umfaßt, dadurch gekennzeichnet, daß die Einrichtung aus einem unabhängigen Anschlußkasten besteht, der in einem Isolierstoffgehäuse die Zwischenwandler (2) enthält, wobei die Primärwicklungen der Zwischenwandler an zum Anschluß an die Stromwandler (6) bestimmte Eingangsklemmen (4, 5) des Kastens und die Sekundärwicklungen der Zwischenwandler an einen Steckverbinder (7) angeschlossen sind, welcher fest mit dem Isolierstoffgehäuse verbunden ist und dazu dient, mit einem zugeordneten, fest mit dem Schutzrelais (9) verbundenen und an die elektronische Verarbeitungsschaltung (10) angeschlossenen Steckverbinder (8) zusammenzuwirken, so daß eine die Öffnung der Sekundärwicklungen der Zwischenwandler (2) bewirkende Abtrennung des Relais in Höhe des Steckverbinders (7) und des zugeordneten Steckverbinders (8) unter Last durchgeführt werden kann.

2. Anschlußeinrichtung nach Anspruch 1, dadurch gekennzeichnet, daß sie Mittel (12, 13) zur Anzeige einer bestehenden Verbindung zwischen dem Anschlußkasten (1) und dem Relais (9) umfaßt.

3. Anschlußeinrichtung nach Anspruch 2, dadurch gekennzeichnet, daß die Anzeigemittel (12, 13) zwei kurzgeschlossene Klemmen (12, 13) des Steckverbinders (7) umfassen.

4. Anschlußeinrichtung nach irgendeinem der Ansprüche 1 bis 3, dadurch gekennzeichnet, daß das Gehäuse zwei aneinander angepaßte Schalen (16, 17) mit Trägerbuchsen (20, 21) zur Montage der Ringkern-Zwischenwandler (2) umfaßt.

5. Anschlußeinrichtung nach Anspruch 4, dadurch gekennzeichnet, daß die Primärwicklung eines Ringkern-Zwischenwandlers (2) einen in eine Trägerbuchse (20, 21) eingesetzten Metalleinsatz (19) umfaßt, wobei zwei auf beiden Seiten in den Einsatz (19) eingedrehte Schrauben (22) die Schraubklemmen (4, 5) zum Anschluß der Primärwicklung des Ringkern-Zwischenwandlers (2) an die Sekundärwicklung des zugeordneten Stromwandlers (6) bilden.

6. Anschlußeinrichtung nach einem der Ansprüche 4 und 5, dadurch gekennzeichnet, daß das Gehäuse zwei Deckel (3) umfaßt, die auf beiden Seiten der Schalen (16, 17) angeordnet sind und die Ringkern-Zwischenwandler abdecken.

7. Anschlußeinrichtung nach Anspruch 6, dadurch gekennzeichnet, daß die Deckel (23) Öffnungen (24) zur Durchführung der zum Anschluß an die Primärwicklungen der Ringkern-Zwischenwandler (2) bestimmten Enden der Sekundärwicklungen der Stromwandler (6) aufweisen.

8. Anschlußeinrichtung nach irgendeinem der Ansprüche 1 bis 7, dadurch gekennzeichnet, daß sie Mittel (28) zur Verriegelung des Kastens (1) am Relais (9) umfaßt.

9. Anschlußeinrichtung nach irgendeinem der Ansprüche 1 bis 8, dadurch gekennzeichnet, daß unabhängig vom Nennstrom der Stromwandler ein gleicher Anschlußkasten verwendet werden kann, wobei die Verarbeitungsschaltung (10) des Relais (9) einen an den genannten Nennstrom angepaßten Lastwiderstand enthält.

## Claims

1. A device (1) for connection of a medium voltage protection relay (9) comprising an electronic processing circuit (10), to secondary windings of current sensors (6) measuring the current in different phases (L1, L2, L3) of a medium voltage power system to be protected, a device comprising toroidal current transformers (2) each comprising a secondary winding and a primary winding designed to be connected to the secondary winding of an associated current sensor (6), a device characterized in that it is formed by an independent connection block comprising, in an insulating enclosure, the current transformers (2), the primary windings of the current transformers being connected to input terminals (4, 5) of the block, designed to be connected to the current sensors, and the secondary windings of the current transformers being connected to a connector (7) fixed to the insulating enclosure and designed to cooperate with a complementary connector (8), securedly united to the protection relay (9) and connected to the electronic processing circuit (10), so as to enable on-load disconnection of the relay at the level of the connector (7) and of the complementary connector (8) causing opening of the secondary windings of the current transformers (2).

2. The connection device according to claim 1, characterized in that it comprises means (12, 13) for indicating connection of the connection block (1) to the relay (9).

3. The connection device according to claim 2, characterized in that the indicating means comprise two short-circuited terminals (12, 13) of the connector (7).

4. The connection device according to any one of the claims 1 to 3, characterized in that the enclosure comprises two complementary shells (16, 17) comprising mounting studs (20, 21) of the toroidal current transformers (2).

5. The connection device according to claim 4, characterized in that the primary winding of a toroidal transformer (2) comprises a metal insert (19) located inside a mounting stud (20, 21), two screws (22) fitted on each side in the insert (19) constituting screw terminals (4, 5) for connection of the primary winding of the toroidal transformer (2) to the secondary winding of the associated current sensor (6).

6. The connection device according to one of the claims 4 and 5, characterized in that the enclosure comprises two covers (23) located on each side of the shells (16, 17) and covering the toroidal current transformers.

7. The connection device according to claim 6, characterized in that the covers (23) comprise passages (24) for the ends of the secondary windings of the current sensors (6) designed to be connected to the primary windings of the toroidal current transformers (2).

8. The connection device according to any one of the claims 1 to 7, characterized in that it comprises means (28) for locking the block (1) onto the relay (9).

9. The connection device according to any one of the claims 1 to 8, characterized in that an identical connection block can be used whatever the rated current supplied by the current sensors, the processing circuit (10) of the relay (9) comprising a charging resistor adapted to said rated current.
